(19) Europäisches Patentamt
European Patent Office
Office européen des brevets

(11) **EP 2 504 916 B1**

(12) **EUROPÄISCHE PATENTSCHRIFT**

(45) Veröffentlichungstag und Bekanntmachung des Hinweises auf die Patenterteilung:
**20.05.2015  Patentblatt 2015/21**

(21) Anmeldenummer: **10777019.0**

(22) Anmeldetag: **16.11.2010**

(51) Int Cl.:
*H02P 23/00* (2006.01)     *H02P 25/08* (2006.01)
*G05B 13/04* (2006.01)     *G05B 19/404* (2006.01)

(86) Internationale Anmeldenummer:
**PCT/EP2010/067574**

(87) Internationale Veröffentlichungsnummer:
**WO 2011/061187 (26.05.2011 Gazette 2011/21)**

(54) **VERFAHREN ZUR KOMPENSATION VON STÖRMOMENTEN IN ELEKTRISCHEN ARBEITSMASCHINEN**

METHOD FOR COMPENSATING DISTURBANCE TORQUES IN ELECTRIC WORKING MACHINES

PROCÉDÉ DE COMPENSATION DE COUPLES PERTURBATEURS DANS DES MACHINES-OUTILS ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2009   DE 102009046959**

(43) Veröffentlichungstag der Anmeldung:
**03.10.2012   Patentblatt 2012/40**

(73) Patentinhaber: **Robert Bosch GmbH**
**70442 Stuttgart (DE)**

(72) Erfinder:
• **VOLLMER, Ulrich**
  **73266 Bissingen (DE)**
• **KUEHN, Timo**
  **76307 Karlsbad (DE)**
• **XU, Min**
  **70435 Stuttgart (DE)**

(56) Entgegenhaltungen:
**EP-A1- 2 012 425          EP-A2- 1 814 000**
**DE-A1-102007 043 736      JP-A- 2001 054 300**
**US-A1- 2008 308 342       US-B1- 6 326 750**

**Beschreibung**

Die Erfindung bezieht sich auf ein Verfahren zur Kompensation von Störmomenten in elektrischen Arbeitsmaschinen nach dem Oberbegriff des Anspruches 1.

Stand der Technik

Elektrische Arbeitsmaschinen, die Permanentmagnete enthalten, besitzen konstruktionsbedingt ein Rastmoment, das auch im unbestromten Zustand wirkt und auf der Anziehungskraft zwischen Magnet und Eisen beruht. Hierdurch entstehen Rastpositionen in bestimmten Winkelstellungen des Rotors, die im Betrieb der Arbeitsmaschine zu einer Welligkeit im Verlauf des abgegebenen Momentes führen. Derartige Rastpositionen treten beispielsweise bei permanenterregten Gleichstrommaschinen und permanenterregten Synchronmaschinen auf.

Die durch die Rastmomente hervorgerufene Welligkeit im Momentenverlauf ist beispielsweise bei einem Einsatz einer derartigen Arbeitsmaschine in einem Lenksystem eines Fahrzeugs vom Fahrer im Lenkrad zu spüren. Durch konstruktive Optimierung kann das Rastmoment zwar minimiert oder beseitigt werden; dies hat jedoch zum einen konstruktive Einschränkungen zur Folge und zum andern eine Verteuerung der Arbeitsmaschine.

Aus der EP 1 780 095 A1 ist es bekannt, Rastmomente durch eine gezielte Bestromung des Elektromotors zu kompensieren, was mithilfe einer Stromregelung durchgeführt wird. Hierbei wird aus dem Verlauf des Rastmoments über dem Rotorwinkel ein Stromverlauf berechnet, der geeignet ist, ein zum Rastmoment inverses Drehmoment zum Ausgleich des Rastmoments zu erzeugen. Dieser Stromverlauf wird auf den Sollstromwert der Stromregelung addiert, in der ein entsprechender Istwert für den Motorstrom erzeugt wird.

Mit dem in der EP 1 780 095 A1 beschriebenen Verfahren ist zwar eine Rastmomentkompensation möglich. Allerdings entsteht prinzipiell eine Verzögerung zwischen dem Stromsollwert und dem das Rastmoment ausgleichenden Kompensationsstrom, was sich insbesondere bei hohen Motordrehzahlen auswirkt, so dass die Welligkeit in dem vom Elektromotor abgegebenen Motormoment nicht vollständig eliminiert werden kann.

Die JP 2001-054300 A betrifft die Kompensation einer Drehmomentwelligkeit, was mittels einer Regelung durchgeführt wird. Bei D1 sind mehrere Stromregler vorhanden, die als PI-Regler ausgeführt sind und denen jeweils eine Rückführung zugeordnet ist, indem der Strom zur Kompensation wieder dem Eingang zugeführt wird. Die Störmomentenkompensation erfolgt somit verzögert.

Die EP 1814 000 B1 offenbart eine Steuerung bzw. Regelung für einen elektrischen Motor. Aus einer Geschwindigkeitsgröße kann ein Störmoment ermittelt werden, wobei der Ausgang der Steuerungseinheit einer Regelung mit einer Stromrückführung und einer Rückführung der Geschwindigkeitsvariablen unterliegt; diese Rückführungen erfolgen stromab der Momentenvariablen, die somit unmittelbar von den Regelungen betroffen ist.

Die DE 10 2007 043 736 A1 betrifft ein Fahrzeug mit einem Hybridantrieb, welcher einen Verbrennungsmotor und einen Elektromotor im Antriebsstrang umfasst. Es soll ein Kompensationsdrehmoment bestimmt werden, welches als Solldrehmoment am Elektromotor einzustellen ist. Durch das Kompensationsdrehmoment sollen Störungen durch Gehäuseschwingungen gedämpft werden. Die Ermittlung des Kompensationsdrehmoments unterliegt einer Regelung mit Rückführungsschleife.

Offenbarung der Erfindung

Der Erfindung liegt die Aufgabe zu Grunde, Störmomente wie beispielsweise Rastmomente in elektrischen Arbeitsmaschinen auch bei hohen Motordrehzahlen kompensieren zu können.

Diese Aufgabe wird erfindungsgemäß mit den Merkmalen des Anspruches 1 gelöst. Die Unteransprüche geben zweckmäßige Weiterbildungen an.

Die Erfindung ist auf elektrische Arbeitsmaschinen anwendbar, insbesondere auf permanenterregte elektrische Arbeitsmaschinen wie z.B. ein permanenterregter Gleichstrommotor oder ein permanenterregter Synchronmotor. Das erfindungsgemäße Verfahren wird vorzugsweise in elektrischen Arbeitsmaschinen eingesetzt, bei denen konstruktionsbedingt Rastmomente auftreten können. Grundsätzlich kommt aber mithilfe des erfindungsgemäßen Verfahrens eine Kompensation von beliebigen Störmomenten in Betracht.

Erfindungsgemäß ist zur Kompensation von Störmomenten in elektrischen Arbeitsmaschinen vorgesehen, dass dem Sollstrom zur Erzeugung eines gewünschten Sollmoments in der Arbeitsmaschine ein Kompensationsstrom überlagert wird, der zur Kompensation des Störmoments wie beispielsweise des Rastmoments dient. Dem Kompensationsstrom wird eine korrespondierende Kompensationsspannung zugeordnet, die geeignet ist, den gewünschten Kompensationsstrom zu erzeugen. Die Kompensationsspannung wird zu einer Grund- bzw. Reglerspannung hinzuaddiert, mit der die Arbeitsmaschine zur Erzeugung des gewünschten Sollmoments beaufschlagt wird.

Im Unterschied zu Ausführungen aus dem Stand der Technik wird auf diese Weise eine Stromsteuerung und keine Stromregelung erreicht, was den Vorteil hat, dass die zur Kompensation erforderliche Spannung verzögerungsfrei berechnet wird und zur Verfügung steht. Bei einer Regelung kann auf eine Änderung des Kompensationsstromes erst nach dem Auftreten einer Regelabweichung reagiert werden, wodurch prinzipbedingt eine Verzögerung entsteht, die durch die erfindungsgemäße Steuerung vermieden wird. Insbesondere zur Rastmomentkömpensation kann die Tatsache ausgenutzt werden, dass der Verlauf des Rastmoments über dem Rotorwinkel bekannt ist, so dass jedem Rotorwirikel ein Rastmoment zugeordnet werden kann, das bei bekannter Drehzahl der Arbeitsmaschine vorausberechnet werden kann. Der gewünschte Kompensationsstrom wird auf diese Weise verzögerungsfrei zur Verfügung gestellt.

Aber auch im Falle von sonstigen Störmomenten, die nicht im Voraus als Funktion des Rotorwinkels ermittelbar sind, ist über die Stromsteuerung ein schnelleres Reagieren möglich, da keine Verzögerung über den Stromregler erfolgt.

Gemäß vorteilhafter Ausführung ist vorgesehen, dass die Grundspannung die in einem Regler erzeugte Reglerspannung ist, die als Stellgröße dem Motor zugeführt wird, wobei die Kompensationsspannung der Reglerspannung überlagert wird. Die Reglerspannung wird in einem Stromregler generiert, dem als Eingangsgröße der Sollstrom zugeführt wird. Hierbei ist es zweckmäßig, dass dem Regler in einer Rückführungsschleife der tatsächliche, gemessene Motorstrom der elektrischen Arbeitsmaschine zur Realisierung eines geschlossenen Stromregelsystems zugeführt wird.

Um zu verhindern, dass der Stromregler den Kompensationsstrom als Störung betrachtet und diesen Anteil in der Regelung eliminiert, wird der Kompensationsstrom, der im gemessenen Stromanteil enthalten ist, in der dem Stromregler zuzuführenden Eingangsgröße berücksichtigt bzw. in der Eingangsgröße subtrahiert. Dies erfolgt gemäß einer ersten vorteilhaften Ausführung dadurch, dass in der Rückführschleife ein Filter enthalten ist, das als Tiefpassfilter hochfrequente Stromanteile ausfiltert. Dies ist in Ausführungsvarianten möglich, in denen der Kompensationsstrom Frequenzanteile mit signifikant höherer Frequenz aufweist als der eigentliche Sollstrom. Eine derartige Tiefpassfilterung wird vorteilhafterweise im Falle von Rastmomenten als Störmomenten eingesetzt.

Gemäß einer anderen vorteilhaften Ausführung ist vorgesehen, dass der Kompensationsstrom vom Motorstrom subtrahiert wird, wofür insbesondere der berechnete Kompensationsstrom unmittelbar von dem in der elektrischen Arbeitsmaschine gemessenen oder auf sonstige Weise ermittelten Motorstrom subtrahiert wird. In der rückführenden Schleife wird demzufolge nur der um den Betrag des Kompensationsstroms reduzierte Motorstromanteil berücksichtigt.

Gemäß noch einer weiteren Ausführung, die eine Kombination von einer Stromsteuerung mit einer Stromregelung beinhaltet, ist vorgesehen, dass der Kompensationsstrom zum Sollstrom unmittelbar hinzuaddiert wird, wobei zugleich in der rückführenden Schleife der tatsächliche Motorstrom subtrahiert wird. Auf diese Weise hebt sich der Kompensationsstrom in der dem Stromregler zuzuführenden Eingangsgröße auf.

Weitere Vorteile und zweckmäßige Ausführungen sind den weiteren Ansprüchen, der Figurenbeschreibung und den Zeichnungen zu entnehmen. Es zeigen:

Fig. 1     ein Blockschaltbild mit einer Prinzipdarstellung eines Regelkreises für einen elektrischen Motor mit einer Rastmomentkompensation,

Fig. 2     ein Blockschaltbild mit einem Regelkreis mit Filterung des Strommesswerts,

Fig. 3     ein Blockschaltbild mit einem Regelkreis mit einer Korrektur des Strommesswerts,

Fig. 4     ein Blockschaltbild mit einem Regelkreis mit einer Addition des Kompensationsstroms auf den Sollstromwert,

Fig. 5     ein Blockschaltbild mit einem Regelkreis mit einer Stromsteuerung für den Sollstrom und für den Kompensationsstrom,

Fig. 6     ein Blockschaltbild mit einem Regelkreis, der eine Korrektur des Sollmoments beinhaltet.

In den Figuren sind gleiche Funktionsblöcke mit gleichen Bezugszeichen versehen.

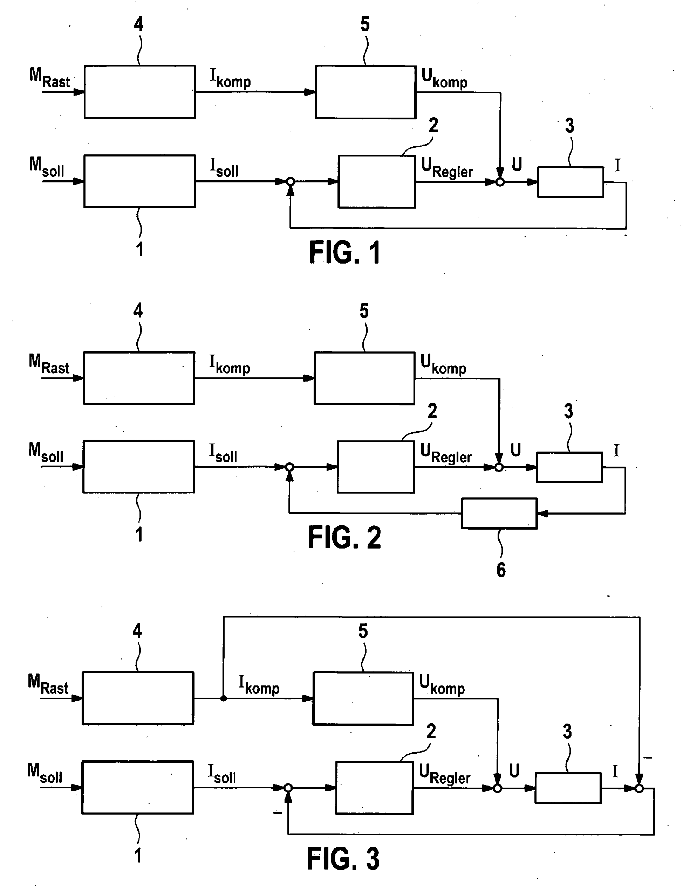

Mit dem in Fig. 1 dargestellten Blockschaltbild kann eine Kompensation des Rastmoments bzw. eines Störmoments in einer elektrische Maschine durchgeführt werden. Das Drehmoment bzw. Motormoment M, das von einer elektrischen Maschine erzeugt wird, umfasst zwei Komponenten, nämlich zum einen das stromabhängige, elektrisch über den Motorstrom I erzeugte Nutzmoment $M_{el}$ und zum andern das stromunabhängige Rastmoment $M_{Rast}$, das vom Rotorwinkel $\varphi$ abhängt:

$$M = M_{el}(I) + M_{Rast}(\varphi) \ .$$

Soll ein bestimmtes Sollmoment $M_{soll}$ erzeugt werden, so wird dazu ein bestimmter Sollstrom $I_{soll}$ benötigt, so dass $M_{el}(I_{soll}) = M_{soll}$ gilt. Unter Berücksichtigung des Rastmoments ergibt sich für das Motormoment M:

$$M = M_{el}(I_{soll}) + M_{Rast}(\varphi) = M_{soll} + M_{Rast}(\varphi).$$

Das gewünschte Drehmoment M wird durch eine Drehmomentwelligkeit des Rastmoments überlagert. Um dies zu kompensieren wird nun zum Sollstrom der Kompensationsstrom $I_{komp}$ addiert. Die Stromanteile $I_{soll}$ und $I_{komp}$ werden so bestimmt, dass

$$M_{el}(I_{soll}) = M_{soll}$$

$$M_{el}(I_{soll} + I_{komp}) = M_{soll} - M_{Rast}(\varphi).$$

Damit ergibt sich das Gesamtmoment zu

$$M^* = M_{el}(I_{soll} + I_{komp}) + M_{Rast}(\varphi) = M_{soll} \quad ;$$

Hängt das elektrische Nutzmoment $M_{el}$ linear vom Strom ab, so vereinfacht sich die Bedingung für die Berechnung von $I_{komp}$ zu

$$M_{el}(I_{komp}) = -M_{Rast}(\varphi).$$

Der zusätzliche Stromanteil $I_{komp}$ wird nicht zum Stromsollwert addiert, sondern es wird erfindungsgemäß eine Kompensationsspannung $U_{komp}$ berechnet, die geeignet ist, den Kompensationsstrom $I_{komp}$ zu erzeugen. Die Kompensationsspannung $U_{komp}$ wird zur vom Regler berechneten Stellgröße $U_{Regler}$ addiert. Dies entspricht einer Stromsteuerung, die den Vorteil hat, dass die benötigte Spannung verzögerungsfrei berechnet wird. Im Gegensatz hierzu kann eine Regelung auf eine Änderung des Kompensationsstroms erst dann reagieren, wenn eine Regelabweichung aufgetreten ist. Dadurch entsteht prinzipbedingt eine Verzögerung, die durch die erfindungsgemäße Steuerung vermieden wird. Ändert sich der Kompensationsstrom schnell bzw. hochfrequent, dann kann eine Regelung den Iststrom nicht mehr schnell genug dem Kompensationsstrom nachführen. Bei der Berechnung der Steuerung wird dagegen ausgenutzt, dass der Verlauf des Rastmoments über dem Rotorwinkel bekannt ist. Bei bekanntem Rotorwinkel und bekannter Drehzahl kann damit das Rastmoment vorausberechnet werden. Es ist somit möglich zukünftige Werte bzw. die Änderung, d.h. die Ableitung des Rastmoments in die Berechnung der Steuerung einfließen zu lassen. Damit kann der gewünschte Kompensationsstrom verzögerungsfrei eingestellt werden.

Wie in Fig. 1 gezeigt, wird zunächst in einer Sollstromberechnungseinheit 1 aus einem zugeführten Sollmoment $M_{soll}$ ein korrespondierender Sollstrom $I_{soll}$ ermittelt, von dem der Motorstrom I abgezogen wird, welcher im elektrischen Motor 3 gemessen wird. Die Differenz aus Sollstrom $I_{soll}$ und Motorstrom I wird als Eingang einem Stromregler 2 zugeführt, in welchem eine Regler- bzw. Grundspannung $U_{Regler}$ ermittelt wird. Der Regler- bzw. Grundspannung $U_{Regler}$ wird additiv eine Kompensationsspannung $U_{Komp}$ zur resultierenden Motorspannung U überlagert, die an den elektrischen Motor 3 angelegt wird. Der Motorspannung U entspricht der Motorstrom I, der gemessen und in einer geschlossenen Regelschleife zurückgeführt und dem Sollstrom $I_{soll}$ überlagert wird.

Die Kompensationsspannung $U_{Komp}$ wird in einer Stromsteuerungseinheit 5 aus einem Kompensationsstrom $I_{Komp}$ berechnet, der am Ausgang einer Sollstromberechnungseinheit 4 anliegt und mit einem Rastmoment $M_{Rast}$ korrespondiert. Anstelle eines Rastmoments $M_{Rast}$ kann auch ein sonstiges Störmoment der Berechnung der Kompensationsspannung $U_{Komp}$ zugrunde gelegt werden.

Der Strom soll nun nicht mehr den Wert $I_{soll}$, sondern den Wert $I_{soll} + I_{komp}$ haben. Da der Regler aber den Strom auf den Sollwert $I_{soll}$ einregelt, muss verhindert werden, dass der Regler den Anteil $I_{komp}$ als Störung betrachtet und wegregelt. Dies kann auf verschiedene Arten durchgeführt werden, die im einzelnen in den Fig. 2 bis 4 dargestellt sind und Ausführungsvarianten zu Fig. 1 darstellen.

Gemäß Blockschaltbild nach Fig. 2 wird der Kompensationsstrom aus dem Strom-Messsignal I herausgefiltert. Hierfür ist in der rückführenden Schleife ein Filter 6 angeordnet, der die Anteile des Kompensationsstroms $I_{Komp}$, der eine signifikant höhere Frequenz als der eigentliche Sollstrom $I_{soll}$ aufweist, herausfiltert.

Gemäß Blockschaltbild nach Fig. 3 wird der Kompensationsstrom $I_{Komp}$ vom Strom-Messsignal I, das im Motor 3 anliegt, subtrahiert. Hierfür wird der Kompensationsstrom $I_{Komp}$ am Ausgang der Sollstromberechnungseinheit 4 zum Ausgang des den Motor 3 repräsentierenden Blocks geführt und vom Motorstrom I abgezogen.

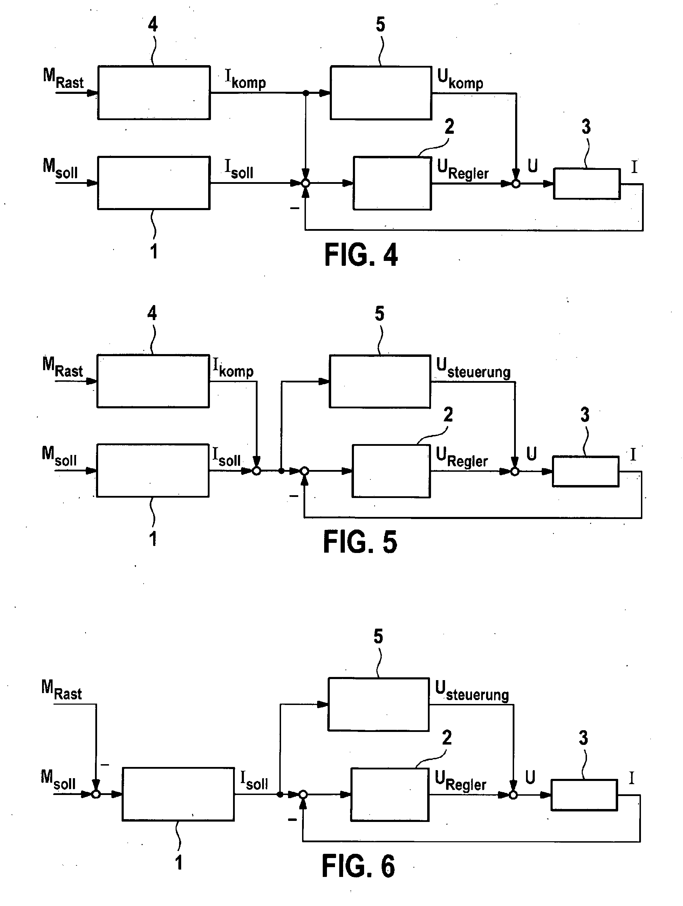

Gemäß Blockschaltbild nach Fig. 4 wird eine Kombination von Stromsteuerung 5 mit einer Stromregelung durchgeführt, indem der Kompensationsstrom $I_{Komp}$ zum Stromsollwert $I_{soll}$ addiert wird.

Die beschriebene Stromsteuerung kann auch auf permanenterregte, im Stern oder Dreieck verschaltete Synchronmaschinen angewandt werden. Derartige Synchronmaschinen werden häufig mit einer sogenannten feldorientierten Regelung geregelt. Es stehen zwei Spannungen $U_d$ und $U_q$ als Stellgrößen zur Verfügung, um die beiden Ströme $I_d$ und $I_q$ zu regeln. Der Zusammenhang zwischen Strömen und Spannungen wird vom sogenannten dq-Modell mit d-Achse und q-Achse wiedergegeben, wobei die d-Achse die Richtung des magnetischen Flusses des Permanentmagneten angibt und die q-Achse um 90° gedreht vor der d-Achse liegt:

$$L_d \dot{I}_d = U_d - R I_d + L_q I_q \omega$$

$$L_q \dot{I}_q = U_q - R I_q - (L_d I_d + \psi_P)\omega$$

wobei $L_d, L_q$ die Induktivitäten in d- und q-Richtung sind, R ist der Wicklungswiderstand, $\psi_p$ der Permanentmagnetfluss, $\omega$ die elektrische Winkelgeschwindigkeit.

Das elektrisch erzeugte Nutzmoment kann wie folgt berechnet werden:

$$M_{el} = \frac{3}{2} N I_q \left( \psi_p + (L_d - L_q) I_d \right).$$

Daraus ergibt sich das Gesamtmoment wie folgt:

$$M = \frac{3}{2} N I_q \left( \psi_p + (L_d - L_q) I_d \right) + M_{Rast}.$$

Der q-Sollstrom $I_{qsoll}$ kann durch Umstellen aus dem gewünschten Moment $M_{el}$ berechnet werden:

$$I_{qsoll} = \frac{2 M_{el}}{N\left( \psi_p + (L_d - L_q) I_{dsoll} \right)}$$

wobei der d-Sollstrom nach zusätzlichen Kriterien bestimmt wird, beispielsweise dergestalt, dass der Strombetrag $\sqrt{I_d^2 + I_q^2}$ minimal wird.

Aufgrund der linearen Abhängigkeit des elektrischen Nutzmoments $M_{el}$ vom q-Strom $I_q$ kann der Strom für die Rastmomentkompensation gemäß

$$I_{qkomp} = -\frac{2 M_{Rast}}{N\left( \psi_p + (L_d - L_q) I_{dsoll} \right)}$$

berechnet werden. Es genügt den q-Anteil des Stroms für die Rastmomentkompensation anzupassen, der d-Strom kann unverändert bleiben.

Die Spannung, die benötigt wird um den Strom $I_{qkomp}$ zu erzeugen, wird aus

$$U_{dkomp} = -L_q I_{qkomp} \omega$$

$$U_{qkomp} = R I_{qkomp} + L_q \dot{I}_{qkomp}$$

ermittelt. Das Rastmoment und der d-Sollstrom sind zeitabhängig. Ändert sich der d-Sollstrom langsam im Vergleich zum Rastmoment, so kann die Ableitung unter der Annahme, dass $I_{dsoll}$ konstant ist, näherungsweise wie folgt berechnet werden:

$$\dot{I}_{qkomp} = \frac{2\dot{M}_{Rast}}{N\left(\psi_p + (L_d - L_q)I_{dsoll}\right)} = \frac{2\dfrac{\mathrm{d}M_{Rast}}{\mathrm{d}\varphi}\,\omega}{N\left(\psi_p + (L_d - L_q)I_{dsoll}\right)}.$$

Aufgrund linearer Abhängigkeit in den Strömen und Spannungen können die Spannungen zur Erzeugung der Sollströme $I_{dsoll}$, $I_{qsol}$, und des Kompensationsstroms $I_{qkomp}$ getrennt berechnet und dann addiert werden. Der Spannungsanteil, der die Sollströme erzeugt, wird vom Regler ausgegeben, der Spannungsanteil, der den Kompensationsstrom erzeugt, wird durch die Stromsteuerung bestimmt.

In einer weiteren Ausführungsform wird auch der Sollstrom $I_{soll}$ einer Kombination aus Regelung und Steuerung zugeführt, was in Fig. 5 dargestellt ist. Der in der Sollstromberechnungseinheit 1 ermittelte Sollstrom $I_{soll}$ und der in der Sollstromberechnungseinheit 4 ermittelte Kompensationsstrom $I_{Komp}$ werden addiert, wobei der Additionswert als Eingangsgröße der Stromsteuerungseinheit 5 zugeführt wird, in welcher eine Steuerungsspannung $U_{Steuerung}$ erzeugt wird. Die Steuerungsspannung $U_{Steuerung}$ wird zur Grund- bzw. Reglerspannung $U_{Regler}$ addiert und als Motorspannung U dem Motor 3 zugeführt.

Der gemessene Motorstrom I wird in der rückführenden Schleife von dem Additionswert aus Sollstrom $I_{soll}$ und Kompensationsstrom $I_{Komp}$ subtrahiert; der daraus resultierende Wert wird dem Stromregler 2 als Eingangsgröße zugeführt.

In einer weiteren Variante, die in Fig. 6 dargestellt ist, wird der Rastmomentwert $M_{Rast}$ vom Drehmomentsollwert $M_{soll}$ abgezogen und das Resultat der Sollstromberechnungseinheit 1 als Eingangsgröße zugeführt. Der Sollstrom $I_{soll}$ wird aus diesem korrigierten Drehmomentsollwert berechnet. Analog zum Ausführungsbeispiel nach Fig. 5 wird der Sollstrom $I_{soll}$ der Stromsteuerungseinheit 5 als Eingangsgröße zugeführt, aus der die Steuerungsspannung $U_{Steuerung}$ ermittelt wird, die zu der Regler- bzw. Grundspannung $U_{Regler}$ hinzuaddiert wird, wobei der daraus resultierende Wert die Motorspannung U darstellt. Der Motorstrom I wird vom Sollstrom $I_{soll}$ subtrahiert, der resultierende Wert dient als Eingangsgröße für den Stromregler 2.

Allen Varianten ist gemeinsam, dass der Strom, der für die Rastmomentkompensation benötigt wird, durch eine Stromsteuerung eingestellt wird. Bei einer Regelung stellt sich eine unerwünschte Phasenverschiebung zwischen $I_{qkomp}$ und $I_q$ ein. Mit der erfindungsgemäßen Steuerung folgt dagegen nach einer Einschwingzeit der Istwert $Iq$ dem gewünschten Kompensationsstrom $I_{qkomp}$ ohne Verzögerung.

## Patentansprüche

1. Verfahren zur Kompensation von Rastmomenten in elektrischen Arbeitsmaschinen, insbesondere in permanenterregten elektrischen Arbeitsmaschinen, bei dem einem Sollstrom ($I_{soll}$) zur Erzeugung eines gewünschten Sollmoments ($M_{soll}$) ein Kompensationsstrom ($I_{Komp}$) zur Kompensation des Rastmoments ($M_{Rast}$) überlagert wird, **dadurch gekennzeichnet, dass** im Wege einer Stromsteuerung anstelle einer Stromregelung dem Kompensationsstrom ($I_{Komp}$) eine korrespondierende Kompensationsspannung ($U_{Komp}$) zugeordnet wird, die einer der Arbeitsmaschine zuzuführenden Grundspannung ($U_{Regler}$) überlagert wird, welche in einem Stromregler (2) zumindest aus dem Sollstrom ($I_{Soll}$) und dem gemessenen Motorstrom (I) ermittelt wird, wobei der aus dem Rotorwinkel bekannte Verlauf des Rastmoments bei bekannter Drehzahl der Arbeitsmaschine vorausberechnet und der Kompensationsstrom ($I_{Komp}$) verzögerungsfrei zur Verfügung gestellt wird.

2. Verfahren nach Anspruch 1, **dadurch gekennzeichnet, dass** die Grundspannung ($U_{Regler}$) die in einem Regler erzeugte Reglerspannung als Stellgröße darstellt, wobei dem Regler als Eingangsgröße der Sollstrom ($I_{soll}$) zugeführt wird.

3. Verfahren nach Anspruch 2, **dadurch gekennzeichnet, dass** dem Regler in einer Rückführung der tatsächliche Motorstrom (I) in der elektrischen Arbeitsmaschine zugeführt wird.

4. Verfahren nach Anspruch 3, **dadurch gekennzeichnet, dass** der Motorstrom (I) in der Rückführung einer Filterung unterzogen wird, um auf den Kompensationsstrom zurückzuführende Stromanteile im Motorstrom (I) herauszufiltern.

5. Verfahren nach Anspruch 3 oder 4, **dadurch gekennzeichnet, dass** der Kompensationsstrom ($I_{Komp}$) vom Motorstrom (I) subtrahiert wird.

**6.** Verfahren nach einem der Ansprüche 2 bis 5, **dadurch gekennzeichnet, dass** der Kompensationsstrom ($I_{Komp}$) zum Sollstrom ($I_{soll}$) addiert wird.

**7.** Verfahren nach einem der Ansprüche 1 bis 6, **dadurch gekennzeichnet, dass** die Kompensationsspannung ($U_{Komp}$) in einer Steuerungseinheit berechnet und der Steuerungseinheit als Eingangsgröße der Kompensationsstrom ($I_{Komp}$) zugeführt wird.

**8.** Verfahren nach einem der Ansprüche 1 bis 7, **dadurch gekennzeichnet, dass** der Steuerungseinheit zur Berechnung der Kompensationsspannung ($U_{Komp}$) als Eingangsgröße der Kompensationsstrom ($I_{komp}$) zugeführt wird.

**9.** Verfahren nach Anspruch 8, **dadurch gekennzeichnet, dass** zum Kompensationsstrom ($I_{Komp}$) der Sollstrom ($I_{soll}$) hinzuaddiert wird.

**10.** Verfahren nach einem der Ansprüche 1 bis 9, **dadurch gekennzeichnet, dass** zum Sollmoment ($M_{soll}$) das Störmoment ($M_{Rast}$) hinzuaddiert wird.

**11.** Regel- bzw. Steuergerät zur Durchführung des Verfahrens nach einem der Ansprüche 1 bis 10.

**12.** Elektrische Arbeitsmaschine mit einem Regel- bzw. Steuergerät nach Anspruch 11.

**13.** Elektrische Arbeitsmaschine nach Anspruch 12, **gekennzeichnet durch** eine Ausführung als permanenterregter Elektromotor, insbesondere als permanenterregter Gleichstrommotor oder als permanenterregter Synchronmotor.

**Claims**

**1.** Method for compensating cogging torques in electric working machines, in particular in permanent magnet electric working machines, in which a compensation current ($I_{comp}$) for compensating the cogging torque ($M_{cog}$) is superposed on a setpoint current ($I_{setp}$) for generating a desired setpoint torque ($M_{setp}$), **characterized in that**, in the course of open-loop current control instead of closed-loop current control, a corresponding compensation voltage ($U_{comp}$) is assigned to the compensation current ($I_{comp}$), which compensation voltage is superposed on a basic voltage ($U_{regulator}$) to be supplied to the working machine, which is determined in a current regulator (2) at least from the setpoint current ($I_{setp}$) and the measured motor current (I), wherein the profile, known from the rotor angle, of the cogging torque at a known rotational speed of the working machine is calculated in advance and the compensation current ($I_{comp}$) is provided without a delay.

**2.** Method according to Claim 1, **characterized in that** the basic voltage ($U_{regulator}$) represents the regulator voltage generated in a regulator as control variable, wherein the setpoint current ($I_{setp}$) is supplied to the regulator as input variable.

**3.** Method according to Claim 2, **characterized in that** the actual motor current (I) in the electric working machine is supplied to the regulator in a feedback loop.

**4.** Method according to Claim 3, **characterized in that** the motor current (I) is subjected to filtering in the feedback loop in order to filter out current components in the motor current (I) which are attributable to the compensation current.

**5.** Method according to Claim 3 or 4, **characterized in that** the compensation current ($I_{comp}$) is subtracted from the motor current (I).

**6.** Method according to any of Claims 2 to 5, **characterized in that** the compensation current ($I_{comp}$) is added to the setpoint current ($I_{setp}$).

**7.** Method according to any of Claims 1 to 6, **characterized in that** the compensation voltage ($U_{comp}$) is calculated in a control unit and the compensation current ($I_{comp}$) is supplied to the control unit as input variable.

**8.** Method according to any of Claims 1 to 7, **characterized in that** the compensation current ($I_{comp}$) is supplied to the control unit as input variable in order to calculate the compensation voltage ($U_{comp}$).

**9.** Method according to Claim 8, **characterized in that** the setpoint current ($I_{setp}$) is added to the compensation current ($I_{comp}$).

**10.** Method according to any of Claims 1 to 9, **characterized in that** the disturbance torque ($M_{cog}$) is added to the setpoint torque ($M_{setp}$).

**11.** Closed-loop or open-loop controller for performing the method according to any of Claims 1 to 10.

**12.** Electric working machine having a closed-loop or open-loop controller according to Claim 11.

**13.** Electric working machine according to Claim 12, **characterized by** an embodiment as permanent magnet electric motor, in particular as permanent magnet DC motor or as permanent magnet synchronous motor.

**Revendications**

**1.** Procédé de compensation de couples de crantage dans des machines de chantier électriques, en particulier dans des machines de chantier électriques à excitation permanente, dans lequel un courant de compensation ($I_{Komp}$) est superposé à un courant nominal ($I_{soll}$) destiné à générer un couple nominal souhaité ($M_{soll}$) pour compenser le moment de crantage ($M_{Rast}$), **caractérisé en ce qu'**au courant de compensation ($I_{Komp}$), sur le trajet d'une commande de courant, au lieu d'une régulation de courant, est associée une tension de compensation ($U_{Komp}$) correspondante qui est superposée à une tension de base ($U_{Regler}$) qui est déterminée au moins à partir du courant nominal ($I_{soll}$) et du courant de moteur mesuré ($I$) dans un régulateur de courant (2), dans lequel le profil du couple de crantage connu à partir de l'angle de rotor lorsque la vitesse de rotation de la machine de chantier est connue, est préalablement calculé et le courant de compensation ($I_{Komp}$) est délivré sans aucun retard.

**2.** Procédé selon la revendication 1, **caractérisé en ce que** la tension de base ($U_{Regler}$) représente en tant que grandeur de réglage la tension de régulation générée dans un régulateur, dans lequel le courant nominal ($I_{soll}$) est délivré au régulateur en tant que grandeur d'entrée.

**3.** Procédé selon la revendication 2, **caractérisé en ce que** le courant de moteur effectif ($I$) dans la machine de chantier électrique est délivré dans une voie de rétroaction au régulateur.

**4.** Procédé selon la revendication 3, **caractérisé en ce que** le courant de moteur ($I$) est soumis à un filtrage dans la voie de rétroaction afin de filtrer dans le courant de moteur ($I$) la partie du courant qui fournit une rétroaction sur le courant de compensation.

**5.** Procédé selon la revendication 3 ou 4, **caractérisé en ce que** le courant de compensation ($I_{Komp}$) est soustrait au courant de moteur ($I$).

**6.** Procédé selon l'une quelconque des revendications 2 à 5, **caractérisé en ce que** le courant de compensation ($I_{Komp}$) est additionné au courant nominal ($I_{soll}$).

**7.** Procédé selon l'une quelconque des revendications 1 à 6, **caractérisé en ce que** la tension de compensation ($U_{Komp}$) est calculée dans une unité de commande et **en ce que** le courant de compensation ($I_{Komp}$) est délivré à l'unité de commande en tant que grandeur d'entrée.

**8.** Procédé selon l'une quelconque des revendications 1 à 7, **caractérisé en ce que** le courant de compensation ($I_{Komp}$) est délivré à l'unité de commande en tant que grandeur d'entrée pour calculer la tension de compensation ($U_{Komp}$).

**9.** Procédé selon la revendication 8, **caractérisé en ce que** le courant nominal ($I_{soll}$) est additionné au courant de compensation ($I_{Komp}$).

**10.** Procédé selon l'une quelconque des revendications 1 à 9, **caractérisé en ce qu'**un couple perturbateur ($M_{Rast}$) est additionné au couple nominal ($M_{soll}$).

**11.** Appareil de régulation ou de commande destiné à mettre en oeuvre le procédé selon l'une quelconque des revendications 1 à 10.

**12.** Machine de chantier électrique comportant un appareil de régulation ou de commande selon la revendication 11.

**13.** Machine de chantier électrique selon la revendication 12, **caractérisée par** une forme de réalisation sous forme de moteur électrique à excitation permanente, en particulier sous forme de moteur à courant continu à excitation permanente ou sous forme de moteur synchrone à excitation permanente.

FIG. 1

FIG. 2

FIG. 3

**FIG. 4**

**FIG. 5**

**FIG. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1780095 A1
- JP 2001054300 A

- EP 1814000 B1
- DE 102007043736 A1